# EUROPEAN PATENT APPLICATION

(11) **EP 1 641 267 A1**
(43) Date of publication of application: **29.03.2006**
(21) Application number: 05008944.0
(22) Date of filing: 23.04.2005
(51) Int. Cl.: H04N 7/18

(54) **Remote observation system and method thereof**

(30) Priority: 23.09.2004 KR 2004076643
(71) Applicant: LG ELECTRONICS INC., Seoul (KR)
(72) Inventor: Rew, Ho-Seon, Mapo-Gu Seoul (JP); Woo, Chun-Kyu, Bupyeong-Gu Incheon (KR)
(74) Representative: Schippan, Ralph

(57) **Abstract**

A remote observation system and a method thereof includes: a robot cleaner for capturing images from the surroundings of a preset patrol path while traveling the preset patrol path and outputting image signals of the images captured from the surroundings when a mode of the robot cleaner is switched to the patrol mode by user's input signal; and a network connection device for transmitting the image signals outputted from the robot cleaner to user equipment through a communications network.

## Description

### BACKGROUND OF THE INVENTION

### 1. Field of the Invention

The present invention relates to a remote observation system and a method thereof, and more particularly, to a remote observation system using a mobile robot such as a robot cleaner.

### 2. Description of the Background Art

In general, a mobile robot, especially a robot cleaner, refers to an apparatus for automatically cleaning an area to be cleaned by sucking a foreign substance such as dust from a bottom surface while moving for itself in rooms, for example, a living room, a bedroom, or the like without user's operation.

In a conventional remote observation camera system using a CCTV (closed-circuit television), a CCTV camera is fixedly positioned in general. Even if a position of the CCTV camera can be remotely controlled, the control of the CCTV camera should be manually operated.

Accordingly, in the conventional remote observation camera system using the CCTV (closed-circuit television), an area at which the CCTV camera is installed can be photographed, but an area at which the CCTV camera is not installed can be photographed only by user's remote controlling of the CCTV camera by hand. That is, in the conventional remote observation camera system, there is a problem that there exists a dead zone the remote observation camera system cannot monitor according to the installation position of the camera because the camera is fixedly positioned.

In order to solve the problem, lots of CCTV cameras may be installed at the dead zone. But, this method not only increases the cost but also is electricity-consuming because the CCTV cameras should be turned on all the time.

### SUMMARY OF THE INVENTION

Therefore, an object of the present invention is to provide a remote observation system and a method thereof capable of getting rid of a dead zone of observation and enhancing user's convenience by user's real-time monitoring the conditions of a specific space such as a home from the outside through a mobile robot such as a robot cleaner.

Another object of the present invention is to provide a remote observation system and a method thereof capable of reducing the cost of CCTV cameras installed to get rid of the dead zone of observation and power consumption of the CCTV cameras by user's real-time monitoring an entire area of a specific space such as a home from the outside through a mobile robot such as a robot cleaner.

To achieve these and other advantages and in accordance with the purpose of the present invention, as embodied and broadly described herein, there is provided a remote observation system comprising a robot cleaner for capturing images from the surroundings of a preset patrol path while traveling the preset patrol path and outputting image signals of the images captured from the surroundings; and a network connection device for transmitting the image signals outputted from the robot cleaner to user equipment through a communications network.

To achieve these and other advantages and in accordance with the purpose of the present invention, as embodied and broadly described herein, there is provided a remote observation method comprising: switching a mode of a robot cleaner to a patrol mode; capturing images of the surroundings of a preset patrol path while travelling the preset patrol path; outputting image signals of the images captured from the surroundings; and transmitting the outputted image signals to user equipment through a communications network.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram showing a construction of a remote observation system using a robot cleaner in accordance with the present invention; and
Figure 2 is a flowchart showing a remote observation method using a robot cleaner in accordance with the present invention.

### DETAILED DESCRIPTION OF THE PREFERRED EMBODIMENTS

Reference will now be made in detail to the preferred embodiments of the present invention, examples of which are illustrated in the accompanying drawings.

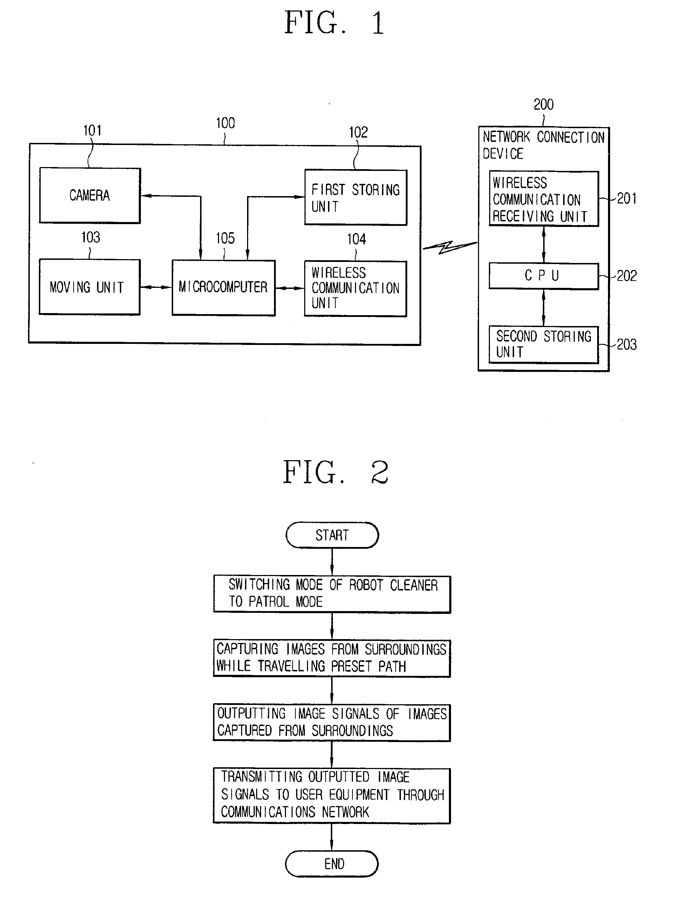

Hereinafter, the preferred embodiments of a remote observation system and a method thereof in accordance with the present invention capable of getting rid of a dead zone of observation and enhancing user's convenience by user's real-time monitoring the conditions of a specific space such as a home from the outside through a mobile robot such as a robot cleaner, and furthermore, capable of reducing the cost of CCTV cameras installed to get rid of a dead zone of observation and power consumption of the CCTV cameras by user's real-time monitoring an entire area of a specific space such as a home from the outside through a mobile robot such as a robot cleaner will be described in detail with reference to Figures 1 and 2.

Firstly, the present invention is devised from the fact that a camera is attached to a robot cleaner and thus the robot cleaner can capture an image of a specific area while moving therein.

Figure 1 is a block diagram showing a construction of a remote observation system using a robot cleaner in accordance with the present invention.

As shown in Figure 1, a remote observation system using a robot cleaner in accordance with the present invention includes: a robot cleaner 100 for capturing images from the surroundings of a preset patrol path while travelling the preset patrol path when a mode of the robot cleaner is switched to a patrol mode by an input signal of a user and outputting image signals of the images captured from the surroundings; and a network connection device 200 for transmitting the image signals outputted from the robot cleaner to user equipment through a communications network. Here, the robot cleaner can capture images from the surroundings of the preset patrol path in real time or at certain time intervals while travelling the preset patrol path. In addition, the patrol path can be previously set by the user's selection and designation.

The robot cleaner 100 includes: a camera 101 for capturing images from the surroundings of the preset patrol path according to control signals generated from the robot cleaner 100 in the patrol mode and outputting image signals of the images captured from the surroundings; a first storing means 102 for storing the image signals outputted from the camera 101 and the preset patrol path; and a moving means 103 for moving the robot cleaner to the preset patrol path; a wireless communication means 104 for wirelessly transmitting the image signals outputted from the camera 101 to the network connection device 200; and a microcomputer 105 for outputting the control signals and transmitting the image signals outputted from the camera 101 to the wireless communication means 104 upon receiving the image signals.

The moving means 103 includes a position recognition part made up of a variety of sensors for position recognition for moving the robot cleaner 100 to the patrol path previously set by the user.

Hereinafter, that the robot cleaner moves to the patrol path previously set by the user by using the position recognition part and captures images from the surroundings of the patrol path is the conventional technique, and therefore a description therefor is omitted. In addition, the robot cleaner can be used in various places such as offices of a large building, the fair grounds, homes, or the like. Hereinafter, a description will be made by limiting the patrol path to a home.

The camera 101 captures images of the surroundings of the patrol path according to the control signals outputted from the microcomputer 105 and outputs images signals of the images captured from the surroundings. The outputted image signals are inputted in the microcomputer 105.

The first storing means 102 stores map information on the patrol path of the robot cleaner, for example, a plane view of a home, and the image signals outputted from the camera 101 upon receiving the image signals through the microcomputer 105. Also, when the user makes a reservation for switching of the mode of the robot cleaner 100 to the patrol mode, a reservation time is stored in the first storing means 102.

The microcomputer 105, when the mode of the robot cleaner 100 is switched to the patrol mode, outputs the control signals on the basis of the map information on the patrol path stored in the first storing means 102. The outputted control signals are inputted in the camera 101 and the moving means 103. In addition, the microcomputer 105 receives the image signals outputted from the camera and outputs the received image signals to the wireless communication means and the storing unit 102. The switching of the mode of the robot cleaner to the patrol mode occurs immediately by user's input signal or occurs by reservation. Here, the user can make a reservation by inputting a specific reservation time at which the mode of the robot cleaner is switched to the patrol mode or can make a reservation for switching the mode of the robot cleaner to the patrol mode after a certain length of time such as 30, 60, 90, 120 mins or the like. When the user makes a reservation for the switching the mode of the robot cleaner to the patrol mode by inputting the specific reservation time, the microcomputer 105 compares the specific reservation time with the current time and switches the mode of the robot cleaner 100 to the patrol mode if values of a comparison result coincide with each other. Moreover, the mode of the robot cleaner 100 may be periodically switched to the patrol mode according to a patrol period set by the user.

The wireless communication means 104 is composed of a wireless local area network for converting the image signals inputted by the microcomputer 105 to wireless communication signals and outputting the converted wireless communication signals in order to transmit the wireless communication signals to the network connection device 200. In addition, the wireless communication means 104 can be made up of an RF transceiver for converting the image signals into RF signals and outputting the converted RF signals or a blue tooth module for converting the image signals into blue tooth communication signals and outputting the converted blue tooth signals. Moreover, the wireless communication means 104 can be made up of a wireless mobile communication module for converting the image signals into wireless mobile communication protocols and transmitting the wireless mobile communication protocols to a wireless communications network or the Internet network.

The network connection device 200 includes: a wireless communication receiving means 201 receiving the image signals transmitted from the robot cleaner 100; a CPU 202 for converting the image signals inputted through the wireless communication receiving means 201 into transfer protocols for network communications; and a second storing means 203 for backing up the image signals transmitted from the robot cleaner 100.

As another preferred embodiment, the wireless communication receiving means 201 may be composed of an RF receiver receiving the image signals transmitted from the robot cleaner 100, and the network connection device 200 may include a CPU for converting the image signals inputted through the RF receiver into transfer protocols for network communications and a second storing means for backing up the image signals transmitted form the robot cleaner 100.

As still another preferred embodiment, the wireless communication receiving means 201 may be composed of a blue tooth communication means receiving the image signals transmitted from the robot cleaner 100. Also, the network connection device 200 may comprise a CPU for converting the image signals inputted through the blue tooth communication means into transfer protocols for network communications and a second storing means for backing up the image signals transmitted from the robot cleaner 100.

Hereinafter, the operation of the remote observation system using the robot cleaner will be described in detail with reference to Figure 2.

Figure 2 is a flowchart showing a remote observation method using a robot cleaner in accordance with the present invention.

As shown in Figure 2, the remote observation method in accordance with the present invention comprises: switching a mode of a robot cleaner to a patrol mode (S21); capturing images of the surroundings of a preset patrol path while travelling the preset patrol path (S22); outputting image signals of the images captured from the surroundings (S23); and transmitting the outputted image signals to user equipment through a communications network (S24). Here, the remote observation method in accordance with the present invention further comprises a step in which the user presets the patrol path by selecting and designating the patrol path. In addition, the remote observation method in accordance with the present invention further comprises a step in which the user can determine whether the robot cleaner captures images from the surroundings of the patrol path in real time or at certain time intervals while travelling the preset patrol path.

The mode of the robot cleaner 100 is immediately switched to the patrol mode by user's input signal or is switched according to a reservation time. Here, the mode of the robot cleaner 100 is periodically switched to the patrol mode according to a patrol period set by the user. The reservation time is stored in the first storing means 102. The microcomputer 105 compares the stored reservation time with the current time and switches the mode of the robot cleaner 100 to the patrol mode when both times coincide with each other. (S21)

When the mode of the robot cleaner 100 is switched to the patrol mode, the robot cleaner 100 captures images from the surroundings of the preset patrol path through the camera 101 installed at the robot cleaner 100 according to the map information on the preset patrol path stored in the first storing means 102 while travelling the preset patrol path. (S22) Herein, the map information on the preset patrol path is previously set by the user, and can be modified later.

The camera 101 outputs the captured image signals to the microcomputer 105. (S23) In addition, the outputted image signals are stored in the first storing means 102. Here, since the image signals are periodically stored in the first storing means 102 according to the patrol period set by the user, the image signals before certain period may be set to be deleted.

The microcomputer 105 transmits the image signals to the user equipment by transmitting the image signals to the network connection device 200 through the wireless communication means 104. (S24) Here, the wireless communication means 104 installed at the robot cleaner converts the image signals captured by the camera 101 into wireless communication signals through a wireless local area network or converts the image signals into RF signals through the RF transceiver or converts the image signals into blue tooth communication signals through the blue tooth module. The network connection device 200 converts the converted image signals into transfer protocols for network communications and transmits the converted transfer protocols to the external user equipment.

Meanwhile, the network connection device 200 backs up the converted image signals in order to archive the converted image signals in the second storing means 203 for a certain amount of time.

As another embodiment, the wireless communication means 104 installed at the robot cleaner can convert the image signals captured by the camera 101 into wireless mobile communication protocols and transmit the wireless communication protocols directly to the exterior user equipment.

The remote observation system in accordance with the present invention can periodically monitor a specific area according to a patrol period set by the user. At this time, when a comparison of the image signals captured according to the previous period and stored in the first storing means 102 with an image signal of the current period shows that they are different from each other, the user or a police can be informed of the image signals of the current period and/or a specific message through the wireless communication network. For example, when the user makes the observation system in accordance with the present invention patrol every one hour, if image signals captured by the camera one hour ago are different from currently captured image signals, the observation system in accordance with the present invention notifies a message indicating the difference, for example, outsider access and the currently captured image signals of the user equipment.

As described in detail so far, the remote observation system and the method thereof in accordance with the present invention can get rid of the dead zone of the observation and enhance user's convenience by user's real-time monitoring the conditions of a specific space such as a home from the outside through a mobile robot such as a robot cleaner.

In addition, the remote observation system and the method thereof can reduce the installation cost of CCTV cameras and power consumption of the CCTV cameras by user's real-time monitoring an entire area of a specific space such as a home from the outside through a mobile robot such as a robot cleaner.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

**1.** A remote observation system comprising:
a robot cleaner for capturing images from the surroundings of a preset patrol path while traveling the preset patrol path and outputting image signals of the images captured from the surroundings; and
a network connection device for transmitting the image signals outputted from the robot cleaner to user equipment through a communications network.

**2.** The system of claim 1, wherein the robot cleaner captures images from the surroundings of the preset patrol path in real-time or at certain time intervals while traveling the preset patrol path.

**3.** The system of claim 1, wherein the patrol path is previously set by the user's selection and designation.

**2.** The system of claim 1, wherein the robot cleaner comprises:
a camera for capturing images of the preset patrol path according to control signals generated from the robot cleaner in the patrol mode and outputting image signals of the images captured from the surroundings;
a first storing means for storing the image signals outputted from the camera and the preset patrol path;
a moving means for moving the robot cleaner to the preset patrol path;
a wireless communication means for wirelessly transmitting the image signals outputted from the camera to the network connection device; and
a microcomputer for outputting the control signals and transmitting the image signals outputted from the camera to the wireless communication means upon receiving the image signals.

**3.** The system of claim 2, wherein the microcomputer compares a reservation time for patrol mode and the current time, and switches the mode of the robot cleaner to the patrol mode when values of a comparison result coincide with each other.

**4.** The system of claim 2, wherein the first storing means stores map information on a specific area and the reservation time for patrol mode.

**5.** The system of claim 2, wherein the first storing means stores the image signals of the images from the surroundings of the patrol path by the camera.

**6.** The system of claim 2, wherein the wireless communication means is an RF (Radio Frequency) transceiver.

**7.** The system of claim 2, wherein the wireless communication means is a wireless local area network.

**8.** The system of claim 2, wherein the wireless communication means is a blue tooth module.

**9.** The system of claim 2, wherein the wireless communication means is a wireless mobile communication module for converting the image signals into wireless mobile communication protocols and transmitting the converted wireless mobile communication protocols to a wireless communications network or the Internet network.

**10.** The system of claim 1, wherein the network connection device comprises:
an RF receiver receiving the image signals outputted from the robot cleaner; and
a CPU (Central Processor Unit) for converting the received image signals into transfer protocols for network communications.

**11.** The system of claim 10, wherein the network connection device further comprises a storing means for backing up the image signals outputted from the robot cleaner.

**12.** The system of claim 1, wherein the network connection device comprises:
a wireless communication receiving means receiving the image signals from the robot cleaner; and
a CPU (Central Processor Unit) for converting the received image signals into transfer protocols for network communications.

**13.** The system of claim 12, wherein the network connection device further comprises a storing unit for backing up the image signals outputted from the robot cleaner.

**14.** The system of claim 1, wherein the network connection device comprises:
a blue tooth module receiving the image signals outputted from the robot cleaner; and
a CPU (Central Processor Unit) for converting the received image signals into transfer protocols for network communications.

**15.** The system of claim 14, wherein the network connection device further comprises a storing means for backing up the image signals outputted from the robot cleaner.

**16.** A remote observation method comprising:
switching a mode of a robot cleaner to a patrol mode;
capturing images of the surroundings of a preset patrol path while travelling the preset patrol path;
outputting image signals of the images from the surroundings; and
transmitting the outputted image signals to user equipment through a communications network.

**17.** The method of claim 16, further comprising:
converting the image signals to wireless mobile communication protocols; and
transmitting the converted wireless mobile communication protocols to the user equipment through the communications network.

**18.** The method of claim 16, wherein, in the step of switching a mode of a robot cleaner to a patrol mode, the mode of the robot cleaner is switched to the patrol mode by user's input.

**19.** The method of claim 16, wherein, in the step of switching a mode of a robot cleaner to a patrol mode, the mode of the robot cleaner is switched to the patrol mode if a comparison of a reservation time for patrol previously set by the user with the current time shows that values of the result comparison are identical to each other.

**20.** The method of claim 16, wherein the outputting the image signals comprises converting the image signals captured by a camera installed at the robot cleaner into RF signals by an RF transceiver.

**21.** The method of claim 16, wherein the outputting the image signals comprises converting the image signals captured by the camera installed at the robot cleaner into wireless communication signals through a wireless local area network.

**22.** The method of claim 16, wherein the outputting the image signals comprises converting the image signals captured by the camera installed at the robot cleaner into blue tooth communication signals through a blue tooth communication module.

**23.** The method of claim 16, wherein the transmitting the outputted image signals to user equipment comprises converting the outputted image signals into transfer protocols for network communications.

**24.** The method of claim 16, wherein the transmitting the outputted image signals to the user equipment comprises backing up the image signals in order to preserve the image signals for a certain amount of time.

**25.** The method of claim 16, wherein the transmitting the outputted image signals to user equipment further comprises:
a step in which when a comparison of the previously captured image signals with currently captured signals shows that they are different from each other, the currently captured image signals and a message indicating the difference are transmitted to the user equipment; and
a step in which when a comparison of the previously captured image signals with currently captured signals shows that they are identical to each other, the currently captured image signals are not transmitted to the user equipment.

**26.** The method of claim 16, further comprising:
a step in which the user presets the patrol path by selecting and designating the patrol path.

**27.** The method of claim 16, further comprising:
a step in which the user can determine whether the robot cleaner captures images from the surroundings of the preset patrol path in real time or at certain time intervals while travelling the preset patrol path.
